# EUROPÄISCHE PATENTSCHRIFT

(11) **EP 2 090 451 B1**
(45) Veröffentlichungstag und Bekanntmachung des Hinweises auf die Patenterteilung: **31.03.2010**
(21) Anmeldenummer: 08002837.6
(22) Anmeldetag: 15.02.2008
(51) Int. Cl.: B60J 7/185, E05C 9/10

(54) **Verschlussvorrichtung eines Schliessbauteils eines Fahrzeugs**
Locking device of a closing component of an automobile
Dispositif de fermeture d'un composant de fermeture d'un véhicule

(43) Veröffentlichungstag der Anmeldung: 19.08.2009
(73) Patentinhaber: Webasto AG, 82131 Stockdorf (DE)
(72) Erfinder: Reinsch, Burkhard, 87600 Kaufbeuren (DE); Grosser, Florian, 82319 Starnberg (DE)
(74) Vertreter: Konnerth, Dieter Hans

(56) Entgegenhaltungen:
- EP-A- 0 972 665
- EP-A- 1 707 415
- DE-A1- 10 202 780

## Beschreibung

Die Erfindung betrifft eine Verschlussvorrichtung eines Schließbauteils eines Fahrzeugs, insbesondere eines Cabrioletverdecks eines Kraftfahrzeugs mit einer Steuerplatte, die an einer Ausnehmungen eines Trägerbauteils drehbar gelagert und von einer Antriebseinrichtung verstellbar ist, und mit zumindest einer Betätigungsstange, die an der Steuerplatte angelenkt ist und mit einem Verschlusselement zum lösbaren Verschließen des Schließbauteils gekoppelt ist.

Aus der EP 0 972 665 A1 ist eine gattungsgemäße Verschlussvorrichtung für ein Schließbauteil eines Fahrzeugs, insbesondere für das Cabriolet-Verdeck eines Kraftfahrzeuges, bekannt geworden, die mindestens einen Antriebsmotor für die Betätigung des Verschlussmechanismus der Verschlussvorrichtung, ein Getriebe, das vorzugsweise mit dem Antriebsmotor in baulicher Einheit ausgeführt ist und mit dem Antriebsmotor in Verbindung steht, einen im wesentlichen kreisrunden Drehkranz, der mit dem Getriebe in Verbindung steht und von diesem in beiden Drehrichtungen um seine Mittelachse gedreht werden kann, ein Trägerblech, das zumindest den Drehkranz trägt, mindestens eine Zug- und Druckstange, die mit ihrem einen Ende an dem Drehkranz gelenkig gelagert ist, und mindestens einen Fanghaken aufweist, der mit dem anderen Ende der Zug- und Druckstange in Verbindung steht und der in eine Öse zwecks Verriegelung eingreifen kann. Des weiteren enthält das Trägerblech eine Bohrung zur Aufnahme des Drehkranzes an seinem äußeren Umfang und zu dessen radialer Lagerung, wobei der Durchmesser der Bohrung dem Außendurchmesser des Drehkranzes angepasst ist.

Der Drehkranz besteht aus zwei Teilkränzen, die miteinander fest verbunden sind, wobei der erste Teilkranz eine derartige Form hat, dass er einerseits zwecks radialer Führung des Drehkranzes an die Innenseite der Bohrung des Trägerblechs angrenzt und andererseits zwecks axialer Führung des Drehkranzes an der einen Seite des Trägerblechs anliegt, und wobei der zweite Teilkranz, der auch als Steuerplatte bezeichnet werden kann, eine im wesentlichen scheibenförmige Gestalt hat und dieser zwecks axialer Führung des Drehkranzes an der anderen Seite des Trägerblechs anliegt.

Der erste Teilkranz ist beispielsweise durch Tiefziehen mit einer Stufe geformt, die die radiale und die axiale Führung in der Bohrung bzw. an der Seite des Trägerblechs bildet. Die Anforderungen an die Genauigkeit der Lagerung bedingt einen erhöhten Aufwand bei der Herstellung des ersten Teilkranzes mit einem Umformwerkzeug.

Die Lagerung der insbesondere zwei Zug- und Druckstangen erfolgt am Drehkranz an zwei Lagerpunkten, die um 180° gegeneinander versetzt sind und jeweils einen sich durch eine Bohrung im Drehkranz erstreckenden Lagerzapfen aufweisen. Bei dieser Gestaltung der Lagerung ist die Anordnung der Lagerpunkte somit stets auf den Bereich innerhalb der Bohrung in dem Trägerblech beschränkt.

Der Erfindung liegt die Aufgabe zugrunde, eine eingangs genannte Verschlussvorrichtung zu schaffen, die hinsichtlich ihrer Gestaltung und Herstellung vereinfacht und verbessert ist.

Die Aufgabe wird bei der eingangs genannten Verschlussvorrichtung dadurch gelöst, dass die Steuerplatte mittels eines in der Ausnehmung angeordneten Lagerringes und einer Lagerscheibe gelagert ist, wobei die Steuerplatte und die Lagerscheibe über den dazwischen angeordneten Lagerring radial hervorragen und mit dem Lagerring fest verbunden sind.

Vorteilhafte Ausgestaltungen der Erfindung sind in den abhängigen Ansprüchen angegeben.

Durch die Gestaltung des Lagerringes und der Lagerscheibe als eigene Lagerbauteile, die mit der Steuerplatte eine drehfeste Einheit bilden, können diese Bauteile einfacher und kostengünstiger hergestellt werden. Zweckmäßigerweise ist bzw. sind die Steuerplatte und/oder der Lagerring und/oder die Lagerscheibe ebenflächig gebildet. Die Bauteile können jeweils für sich an unterschiedliche Lagersituation wie z. B. unterschiedliche Lagerdurchmesser angepasst werden. Der Lagerring kann auch scheibenförmig ohne zentrale Bohrung gebildet sein. Bevorzugt übernimmt ausschließlich der Lagerring die radiale Führung, so dass kein weiteres Lagerbauteil mit einer radialen Führungsfläche gebildet werden muss. Als Betätigungsstange wird allgemein jede kraftübertragende Betätigungseinrichtung verstanden und kann auch z. B. ein Seilzug oder Bowdenzug sein.

Wenn die zumindest eine Betätigungsstange ausschließlich an der Steuerplatte angelenkt ist, ist die Position der Anlenkung nicht durch den Lagerdurchmesser eingeschränkt. Zweckmäßigerweise ist die zumindest eine Betätigungsstange an der Steuerplatte in einem Anlenkpunkt angelenkt, der sich ausgehend von der Mittelachse der Ausnehmung in radialer Richtung außerhalb der Ausnehmung befindet. Damit können größere Betätigungs- oder Stellwege beim Verschwenken der Steuerplatte erzielt werden. Bevorzugt enthält die Steuerplatte zumindest eine radiale Erweiterung, an der die Betätigungsstange angelenkt ist.

In bevorzugter Gestaltung ist der Lagerring in einem ringförmigen Gleitlagerelement eingepasst, das am die Ausnehmung begrenzenden Randabschnitt des Trägerbauteils angebracht ist und an dem die Steuerplatte und die Lagerscheibe sich gegenüberliegend in Gleitkontakt anliegen. Grundsätzlich können jedoch auch andere Lagerelemente wie Wälz- oder Rollenlager eingesetzt werden.

Vorzugsweise ist die Steuerplatte mit dem Lagerring und der Lagerscheibe mittels Verklebung, Verschraubung oder mittels Nietbolzen fest verbunden.

Eine Antriebswelle der Antriebseinrichtung verbindet bevorzugt den Lagerring mit einem Getriebe der Antriebseinrichtung. Der insbesondere aus Metall gebildete Lagerring enthält z. B. ein Formschlussprofil an einer Innenöffnung, das mit einem zugeordneten Formschlussprofil an der Antriebswelle korrespondiert.

Wenn der die Ausnehmung begrenzende ringförmige Randabschnitt des Trägerbauteils gegenüber dem angrenzenden Bereich des Trägerbauteils gekröpft gebildet ist, insbesondere in der zur Antriebseinrichtung gegenüberliegenden Richtung, so wird hierdurch die Festigkeit des Trägerbauteils am Randabschnitt erhöht und die ebene Steuerplatte ist in ausreichendem Abstand zum Trägerbauteil angeordnet.

Nachfolgend wird eine erfindungsgemäße Verschlussvorrichtung anhand eines Ausführungsbeispiels unter Bezugnahme auf die Zeichnung näher erläutert. Es zeigt:

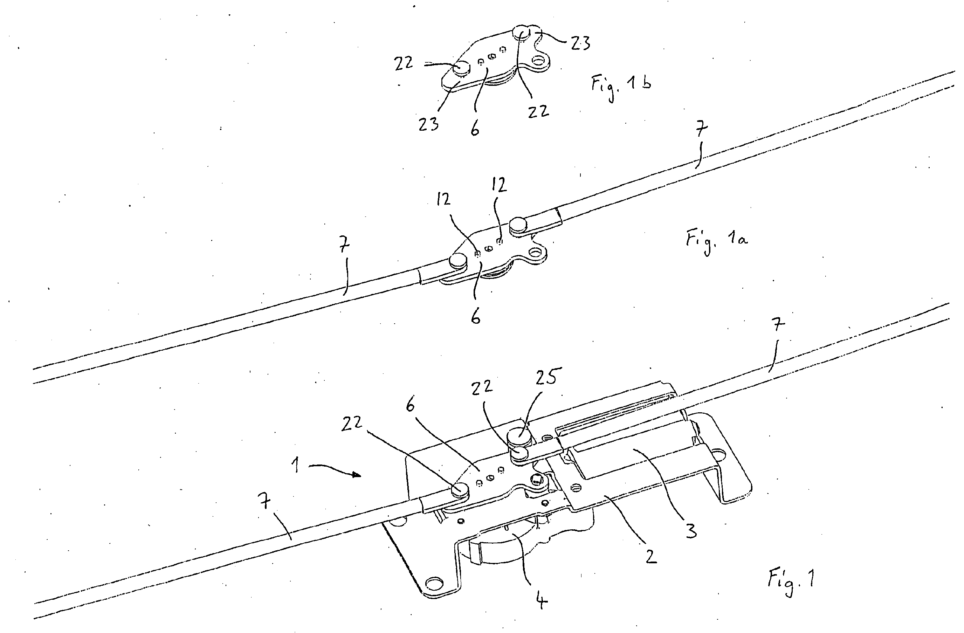

- Fig. 1: in einer perspektivischen Draufsicht eine Verschlussvorrichtung (Fig.1a und 1b zeigen Teile der Verschlussvorrichtung);

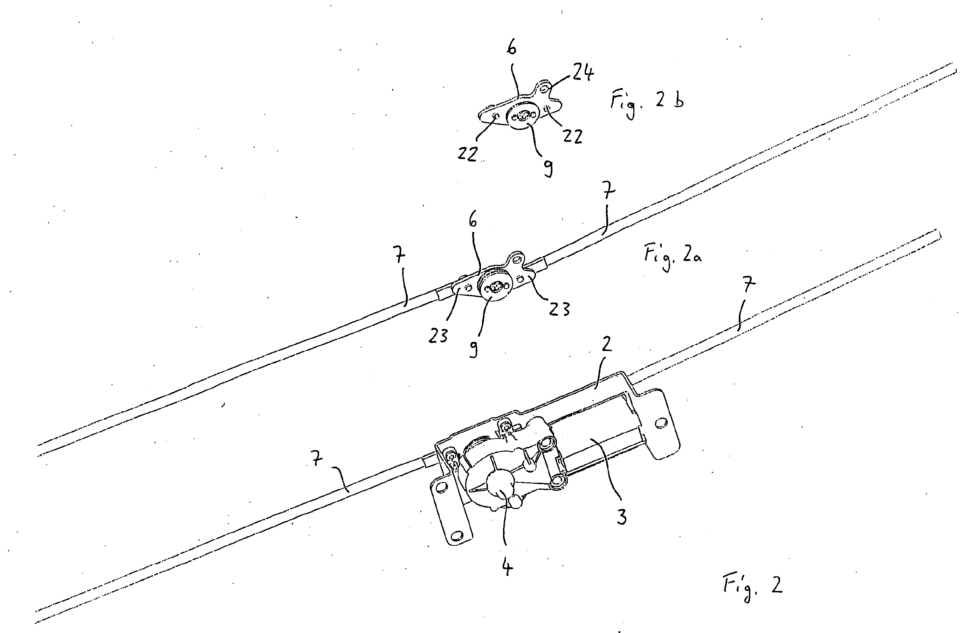

- Fig. 2: in einer perspektivischen Unteransicht die Verschlussvorrichtung (Fig. 2a und 2b zeigen Teile der Verschlussvorrichtung);

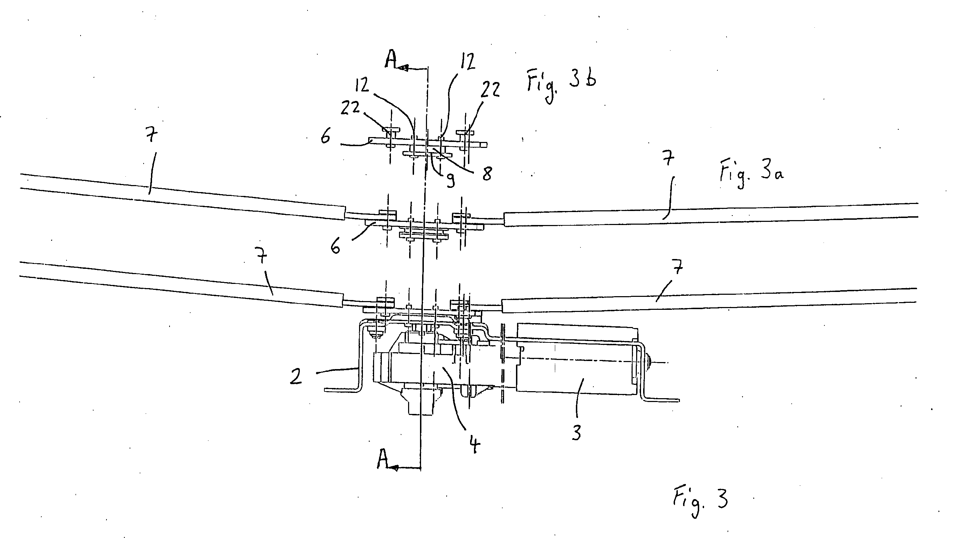

- Fig. 3: in einer Seitenansicht die Verschlussvorrichtung der Fig. 1 und 2 (Fig. 3a und 3b zeigen Teile der Verschlussvorrichtung);

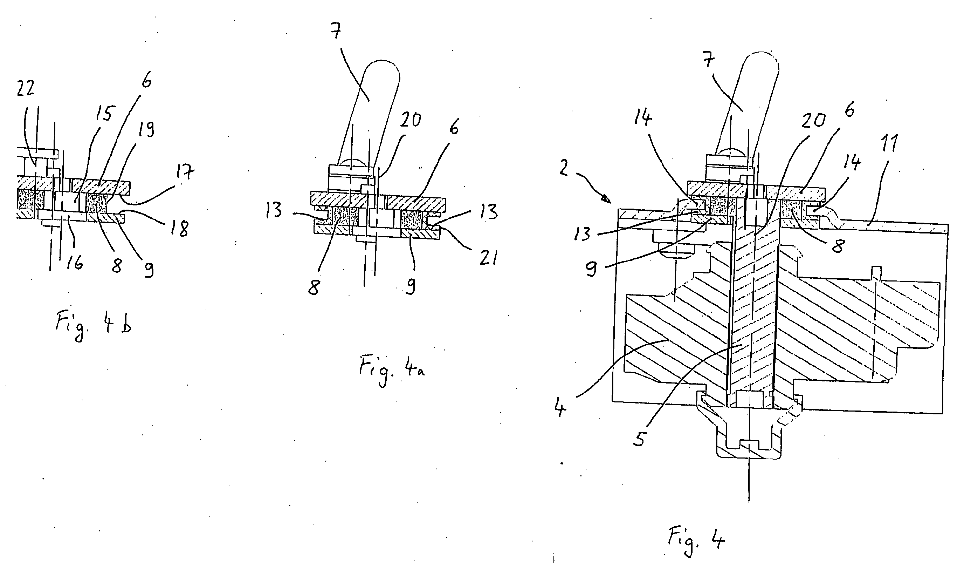

- Fig. 4: in einer Schnittansicht gemäß vertikaler Schnittebene A - A der Fig. 3 die Verschlussvorrichtung (Fig. 4a und 4b zeigen Teile der Verschlussvorrichtung);

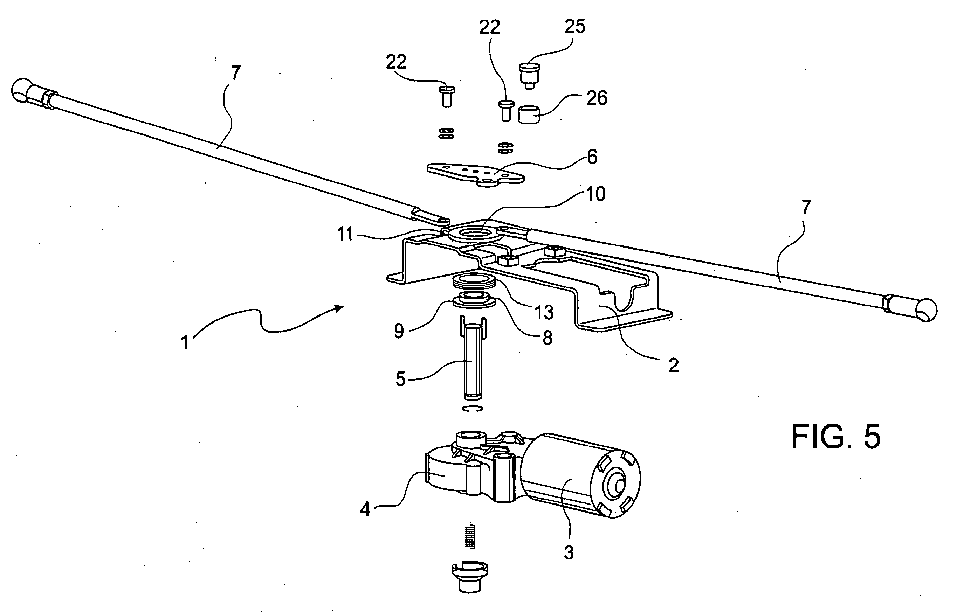

- Fig. 5: in einer perspektivischen Draufsicht die Verschlussvorrichtung der Fig. 1 bis 4; und
- Fig. 6: in einer perspektivischen Draufsicht die Verschlussvorrichtung mit beidseitigen antreibbaren Riegeleinrichtungen.

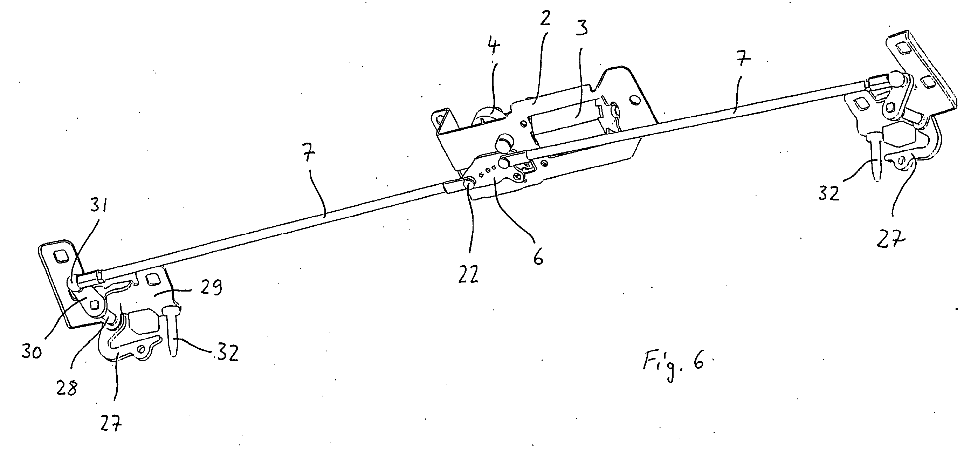

Eine Verschlussvorrichtung 1 eines Schließbauteils eines Fahrzeugs, beispielsweise einer Dachspitze oder eines Frontspriegels eines Cabrioletverdecks, ist grundsätzlich gemäß der in der EP 0 972 665 A1 beschriebenen Verschlussvorrichtung aufgebaut und enthält in Übereinstimmung mit dieser bekannten Verschlussvorrichtung ein Trägerbauteil 2, eine Antriebseinrichtung in Gestalt eines Elektromotors 3 mit angeflanschtem Getriebe 4, eine mit dem Getriebe 4 verbundene Antriebswelle 5, eine von der Antriebswelle 5 antreibbare Steuerplatte 6 sowie zwei an der Steuerplatte 6 angelenkte Betätigungsstangen 7, die sich von dem z. B. mittig an der Dachspitze angeordneten Trägerbauteil 2 zur rechten bzw. zur linken Seite der Dachspitze erstrecken und dort jeweils mit einem Verschlusshaken verbunden sind (siehe Fig. 6), der an einem Verschlussgegenstück an einem Windlauf des Fahrzeugs verriegelbar ist.

Die erfindungsgemäße Steuerplatte 6 ist hingegen mittels einer Lagerung, die einen Lagerring 8 und eine Lagerscheibe 9 umfasst, an dem Trägerbauteil 2 an einer zur Antriebswelle 5 konzentrischen runden Ausnehmung 10, die in einer Trägerplatte 11 des Trägerbauteils 2 gebildet ist, drehbar gelagert.

Die Steuerplatte 6 ist mit der Lagerscheibe 9 und dem dazwischen angeordneten Lagerring 8 z. B. mittels Nieten 12 fest verbunden. Der Lagerring 8, dessen Außendurchmesser kleiner ist als der Außendurchmesser der Lagerscheibe 9, ist in ein ringförmiges Gleitlagerelement 13 eingepasst, das im Querschnitt U-förmig ist und an einem die Ausnehmung 10 begrenzenden Randabschnitt 14 des Trägerbauteils 2 bzw. der Trägerplatte 11 angebracht ist. Der Randabschnitt 14 kann gegenüber der Trägerplatte 11 nach außen oder oben gekröpft gebildet sein.

Die Antriebswelle 5 ist z. B. mit dem Lagerring 8 drehfest verbunden, beispielsweise durch Formschluss mit einer entsprechenden Profilierung oder Verzahnung am Oberende der Antriebswelle 5 und der zentralen Öffnung 15 des Lagerringes 8. Die Lagerscheibe 9 weist insbesondere eine größere zentrale Öffnung 16 auf, so dass sie ohne direkten Kontakt mit der Antriebswelle 5 ist.

Im Einbauzustand sind somit die Steuerplatte 6 und die Lagerscheibe 9 mit ihren einander zugewandten Innenflächen 17 bzw. 18 sowie der Lagerring 8 mit seiner Außenumfangsfläche 19 in Gleitkontakt an dem Gleitlagerelement 13, das bevorzugt aus einem Kunststoff besteht. Da die Steuerplatte 6 und die Lagerscheibe 9 bezüglich der zur Antriebswelle 5 koaxialen Drehachse 20 radial zumindest bis zum Außendurchmesser 21 des Gleitlagerelements 13 reichen, ist eine sichere kraftaufnehmende Abstützung der Lagerung an dem Randabschnitt 14 des Trägerbauteils 2 gewährleistet, wobei bevorzugt der Lagerring 8 ausschließlich die radiale Führung und die Steuerplatte 6 und die Lagerscheibe 9 ausschließlich die axiale Führung übernehmen.

Die beiden Betätigungsstangen 7 sind an der Steuerplatte 6 mittels Achsbolzen 22 gelenkig gelagert, die an zwei sich bezüglich der Drehachse 20 in etwa gegenüberliegenden Erweiterungen 23 der Steuerplatte 6 angeordnet sind. Diese Gestaltung ermöglicht eine vom Durchmesser der Ausnehmung 10 bzw. der Lagerung unabhängige Positionierung der Achsbolzen 22 an der Steuerplatte 6 und damit eine bedarfsgerechte Anlenkung der Betätigungsstangen 7, mit der die Hebel- und Kraftverhältnisse am Antrieb einstellbar sind. An einer dritten Erweiterung 24 der Steuerplatte 6 kann ein Anschlagbolzen 25 mit einem Puffer 26 angebracht sein, so dass der Schwenkweg der Steuerplatte 6 mechanisch begrenzt ist.

Sowohl der Lagerring 8 wie auch die Lagerscheibe 9 sind einfach herzustellende ebenflächige Bauteile, die gegenüber dem entsprechenden Lagerbauteil der EP 0 972 665 A1 (erster Teilkranz 3a) ohne einen aufwändigen Umformvorgang hergestellt werden können. Auch die Steuerplatte 6 kann ebenflächig gebildet sein. Da die Drehkraft der Antriebswelle 5 insbesondere nur am Lagerring 8 eingeleitet wird, kann die Steuerplatte 6 ohne eine entsprechende Formung oder Profilierung gebildet werden. Die Lagerung besteht somit aus einfachen Bauteilen, die an unterschiedliche Lagersituationen anpassbar und für jeweils nur eine Lagerfunktion in axialer bzw. radialer Richtung gebildet sind.

Die Betätigung der Verschlussvorrichtung erfolgt grundsätzlich gemäß der in der EP 0 972 665 A1 beschriebenen Art und Weise. Ein Verschlusshaken 27 (siehe Fig. 6) ist mittels einer Welle 28 an einem an der Dachspitze befestigten Träger 29 schwenkbar gelagert. Ein mit der Welle 28 fest verbundener Antriebshebel 30 enthält einen Kugelzapfen 31, an dem die Betätigungsstange 7 gelagert ist. Ein Zentrierbolzen 32 greift in eine zugeordnete Aufnahme am Verschlussgegenstück am Windlauf. Der beiden durch die Verschlussvorrichtung betätigten Verschlusshaken 27 halten die Dachspitze am Windlauf verriegelt.

### Bezugszeichenliste

- 1: Verschlussvorrichtung
- 2: Trägerbauteil
- 3: Elektromotor
- 4: Getriebe
- 5: Antriebswelle
- 6: Steuerplatte
- 7: Betätigungsstange
- 8: Lagerring
- 9: Lagerscheibe
- 10: Ausnehmung
- 11: Trägerplatte
- 12: Niet
- 13: Gleitlagerelement
- 14: Randabschnitt
- 15: Öffnung
- 16: Öffnung
- 17: Innenfläche
- 18: Innenfläche
- 19: Außenumfangsfläche
- 20: Drehachse
- 21: Außendurchmesser
- 22: Achsbolzen
- 23: Erweiterung
- 24: Erweiterung
- 25: Anschlagbolzen
- 26: Puffer
- 27: Verschlusshaken
- 28: Welle
- 29: Träger
- 30: Antriebshebel
- 31: Kugelzapfen
- 32: Zentrierbolzen

## Patentansprüche

1. Verschlussvorrichtung eines Schließbauteils eines Fahrzeugs, insbesondere eines Cabrioletverdecks eines Kraftfahrzeugs
mit einer Steuerplatte (6), die an einer Ausnehmungen (10) eines Trägerbauteils (2) drehbar gelagert und von einer Antriebseinrichtung (3, 4) verstellbar ist, und
mit zumindest einer Betätigungsstange (7), die an der Steuerplatte (6) angelenkt ist und mit einem Verschlusselement zum lösbaren Verschließen des Schließbauteils gekoppelt ist,
**dadurch gekennzeichnet,**
**dass** die Steuerplatte (6) mittels eines in der Ausnehmung (10) angeordneten Lagerringes (8) und einer Lagerscheibe (9) gelagert ist,
wobei die Steuerplatte (6) und die Lagerscheibe (9) über den dazwischen angeordneten Lagerring (8) radial hervorragen und mit dem Lagerring (8) fest verbunden sind.

2. Verschlussvorrichtung nach Anspruch 1,
**dadurch gekennzeichnet, dass** ausschließlich der Lagerring (8) die radiale Führung übernimmt.

3. Verschlussvorrichtung nach Anspruch 1 oder 2,
**dadurch gekennzeichnet, dass** die zumindest eine Betätigungsstange (7) ausschließlich an der Steuerplatte (6) angelenkt ist.

4. Verschlussvorrichtung nach einem der Ansprüche 1 bis 3,
**dadurch gekennzeichnet, dass** die zumindest eine Betätigungsstange (7) an der Steuerplatte (6) in einem Anlenkpunkt (22) angelenkt ist, der sich ausgehend von der Mittelachse (20) der Ausnehmung (10) in radialer Richtung außerhalb der Ausnehmung (10) befindet.

5. Verschlussvorrichtung nach einem der Ansprüche 1 bis 4,
**dadurch gekennzeichnet, dass** der Lagerring (8) in einem ringförmigen Gleitlagerelement (13) eingepasst ist, das am die Ausnehmung (10) begrenzenden Randabschnitt (14) des Trägerbauteils (2) angebracht ist und an dem die Steuerplatte (6) und die Lagerscheibe (9) sich gegenüberliegend in Gleitkontakt anliegen.

6. Verschlussvorrichtung nach einem der Ansprüche 1 bis 5,
**dadurch gekennzeichnet, dass** die Steuerplatte (6) mit dem Lagerring (8) und der Lagerscheibe (9) mittels Verklebung, Verschraubung oder mittels Nietbolzen (12) fest verbunden ist.

7. Verschlussvorrichtung nach einem der Ansprüche 1 bis 6,
**dadurch gekennzeichnet, dass** die Steuerplatte (6) und/oder der Lagerring (8) und/oder die Lagerscheibe (9) ebenflächig gebildet ist bzw. sind.

8. Verschlussvorrichtung nach einem der Ansprüche 1 bis 7,
**dadurch gekennzeichnet, dass** eine Antriebswelle (5) den Lagerring (8) mit einem Getriebe (4) der Antriebseinrichtung verbindet.

9. Verschlussvorrichtung nach einem der Ansprüche 1 bis 8,
**dadurch gekennzeichnet, dass** der die Ausnehmung (10) begrenzende ringförmige Randabschnitt (14) des Trägerbauteils (2) gegenüber dem angrenzenden Bereich des Trägerbauteils (2) gekröpft gebildet ist, insbesondere in der zur Antriebseinrichtung (3, 4) gegenüberliegenden Richtung.

10. Verschlussvorrichtung nach einem der Ansprüche 1 bis 9,
**dadurch gekennzeichnet, dass** die Steuerplatte (6) zumindest eine radiale Erweiterung (23) aufweist, an der die Betätigungsstange (7) angelenkt ist.

## Claims

1. Locking device of a closing component of a vehicle, in particular of a cabriolet top of a motor vehicle,
with a control plate (6) which is mounted rotatably on a recess (10) in a support component (2) and is adjustable by a driving device (3, 4), and
with at least one actuating rod (7) which is articulated on the control plate (6) and is coupled to a locking element for the releasable locking of the closing component, **characterized in that** the control plate (6) is mounted by means of a bearing ring (8) arranged in the recess (10) and by means of a bearing disc (9), the control plate (6) and the bearing disc (9) protruding radially over the bearing ring (8) arranged in between and being connected fixedly to the bearing ring (9).

2. Locking device according to Claim 1, **characterized in that** only the bearing ring (8) takes on the radial guidance.

3. Locking device according to Claim 1 or 2, **characterized in that** the at least one actuating rod (7) is articulated exclusively on the control plate (6).

4. Locking device according to one of Claim 1 to 3, **characterized in that** the at least one actuating rod (7) is articulated on the control plate (6) at an articulation point (22) which, starting from the centre axis (20) of the recess (10), is located in the radial direction outside the recess (10).

5. Locking device according to one of Claims 1 to 4, **characterized in that** the bearing ring (8) is fitted in an annular sliding bearing element (13) which is attached to the border section (14) of the support component (2), which border section bounds the recess (10), and against which sliding bearing element the control plate (6) and the bearing disc (9) bear opposite each other in sliding contact.

6. Locking device according to one of Claims 1 to 5, **characterized in that** the control plate (6) is fixedly connected to the bearing ring (8) and the bearing disc (9) by means of adhesive bonding, screwing or by means of clinched bolts (12).

7. Locking device according to one of Claims 1 to 6, **characterized in that** the control plate (6) and/or the bearing ring (8) and/or the bearing disc (9) is and/or are formed to be plane.

8. Locking device according to one of Claims 1 to 7, **characterized in that** a drive shaft (5) connects the bearing ring (8) to a gear mechanism (4) of the driving device.

9. Locking device according to one of Claims 1 to 8, **characterized in that** the annular border section (14) of the support component (2), which border section bounds the recess (10), is formed to be bent in relation to the adjacent region of the support component (2), in particular in the direction opposite the driving device (3, 4).

10. Locking device according to one of Claims 1 to 9, **characterized in that** the control plate (6) has at least one radial expanded portion (23) on which the actuating rod (7) is articulated.

## Revendications

1. Dispositif de fermeture d'un composant de fermeture d'un véhicule, notamment d'une capote de cabriolet d'un véhicule automobile avec une plaque de commande (6) disposée de façon pivotante au niveau d'évidements (10) d'un composant de support (2) et réglable à l'aide d'un dispositif d'entraînement (3, 4) ; et
avec au moins une tige d'actionnement (7) articulée au niveau de la plaque de commande (6) et couplée à un élément de fermeture pour fermer de façon amovible le composant de fermeture ;
**caractérisé en ce que :**
la plaque de commande (6) est disposée à l'aide d'une bague de roulement (8) disposée dans l'évidement (10) et d'un disque de roulement (9) ;
la plaque de commande (6) et le disque de roulement (9) saillant dans le plan radial hors de la bague de roulement (8) intercalée et étant reliés fixement à la bague de roulement (8).

2. Dispositif de fermeture selon la revendication 1, **caractérisé en ce que** seule la bague de roulement (8) intègre le guide radial.

3. Dispositif de fermeture selon la revendication 1 ou 2, **caractérisé en ce que** l'au moins une tige d'actionnement (7) est articulée exclusivement au niveau de la plaque de commande (6).

4. Dispositif de fermeture selon l'une quelconque des revendications 1 à 3, **caractérisé en ce que** l'au moins une tige d'actionnement (7) est articulée au niveau de la plaque de commande (6) en un point d'articulation (22) qui se trouve, en partant de l'axe central (20) de l'évidement (10), dans la direction radiale à l'extérieur de l'évidement (10).

5. Dispositif de fermeture selon l'une quelconque des revendications 1 à 4, **caractérisé en ce que** la bague de roulement (8) est insérée dans un élément de palier glissant (13) de forme annulaire disposé au niveau du segment de bord (14) du composant de support (2) délimitant l'évidement (10) et au niveau duquel la plaque de commande (6) et le disque de roulement (9) reposent en contact glissant de façon opposée.

6. Dispositif de fermeture selon l'une quelconque des revendications 1 à 5, **caractérisé en ce que** la plaque de commande (6) est reliée fixement à la bague de roulement (8) et au disque de roulement (9) par collage, vissage ou à l'aide de boulons rivetés (12).

7. Dispositif de fermeture selon l'une quelconque des revendications 1 à 6, **caractérisé en ce que** la plaque de commande (6) et/ou la bague de roulement (8) et/ou le disque de roulement (9) est et/ou sont formés d'une surface plane.

8. Dispositif de fermeture selon l'une quelconque des revendications 1 à 7, **caractérisé en ce qu'**un arbre d'entraînement (5) relie la bague de roulement (8) à un engrenage (4) du dispositif d'entraînement.

9. Dispositif de fermeture selon l'une quelconque des revendications 1 à 8, **caractérisé en ce que** le segment de bord (14) de forme annulaire du composant de support (2) délimitant l'évidement (10) par rapport à la zone connexe du composant de support (2) prend une forme coudée, notamment dans la direction opposée au dispositif d'entraînement (3, 4).

10. Dispositif de fermeture selon l'une quelconque des revendications 1 à 9, **caractérisé en ce que** la plaque de commande (6) comporte au moins un élargissement radial (23) au niveau duquel la tige d'actionnement (7) est articulée.
